# EUROPEAN PATENT APPLICATION

(11) **EP 1 126 717 A1**
(43) Date of publication of application: **22.08.2001**
(21) Application number: 00301207.7
(22) Date of filing: 16.02.2000
(51) Int. Cl.: H04N 7/24, H04Q 7/22, H04L 1/00

(54) **Mobile radio telecommunication system with real-time video service**

(71) Applicant: LUCENT TECHNOLOGIES INC., Murray Hill, New Jersey 07974-0636 (US)
(72) Inventor: Eryurtlu, Faruk Mehmet Omer, Swindon, Wilts SN2 3ZQ (GB); Wu, Jian Jun, Reading, Berkshire (GB); Yan, Ran-hong, Farington, Oxon SN7 7SS (GB)
(74) Representative: Williams, David John

(57) **Abstract**

In a GPRS or EDGE or UMTS system, a real-time video service is provided by selecting one of a small number, e.g. four, predetermined channel coding rates applicable for video, applying the rate to the video data in the application layer, and transmitting the data over the radio interface to a mobile system together with, for each burst, a header indicating the selected coding rate and a temporary flow indicator. The short header allows video payload capacity to be increased. One of the predetermined channel coding rates is a 1/1 or transparent rate.

## Description

This invention relates to a digital mobile telecommunications system such as the General Packet Radio Service (GPRS), the Enhanced Data Rate for GSM Evolution (EDGE) and the Universal Mobile Telecommunications System (UMTS). Such systems are being developed to accommodate data users in addition to voice users.

In such systems, for example GPRS/EDGE, in the link layer of the 7-layer protocol stack, application packets are segmented into fixed size Radio Link Control (RLC) blocks, which also include a header. The RLC blocks are then distributed into bursts which occupy one time slot in the GPRS/EDGE system.

In the ETSI Tdoc SMG2 WPA 127/99, WPB 003/99, "Two burst based link quality control proposal for EGPRS", January 1999, the major telecommunications companies have agreed on a scheme for general data. In this scheme, there are several combinations for modulation and coding schemes. The header formats, channel coding and interleaving techniques differ from one scheme to another.

Video data streams have different characteristics to other data streams. In video, the bit rate is variable. Although a rate controller can be used to stabilize the average bit rate in a certain time interval, the number of bits generated in each frame or picture block varies significantly. Furthermore, the error sensitivities of the parameters and particular bits within those parameters are highly dependent on the bit stream context.

Also, parameters in the video bit stream have variable length codes. This can cause loss of synchronisation. This means that a single bit error may be equivalent to a burst of error. Use of existing interleaving schemes spreads the errors within the video bit stream, causing more damage.

It is an object of the invention to provide a method and apparatus for coding video data streams to allow their efficient transmission by a mobile telecommunications system.

According to the invention in a telecommunications system, a method of supplying a real-time video data service characterized by the steps of defining a plurality of channel coding rates applicable to video data, said plurality including a 1/1 coding rate; selecting one of said rates and applying it to the video data; and transmitting the coded video data over a link to a video receiver.

Also according to the invention, a mobile radio telecommunication system comprising a core network, at least one Support Node, at least one Radio Network Controller and at least one Mobile Station, the system being arranged for supply of a real-time video service to said Mobile Station characterized in that said system is arranged to select one of a plurality of channel coding rates, said plurality including a 1/1 rate, to apply said selected rate to a video signal, and to supply the coded signal to said Mobile Station.

The invention will be described by way of example only with reference to the accompanying drawings in which:-
Figure 1 is a highly schematic illustration of a mobile telecommunication system;
Figure 2 illustrates the 7 layer protocol stacks;
Figure 3a illustrates a downlink header;
Figure 3b illustrates an uplink header;
Figures 4a and 4b illustrate RLC/MAC format for transparent downlink and uplink modes of coding;
Figures 4c to 4e illustrate RLC/MAC format for three other modes of coding for the downlink; and
Figure 5 illustrates interleaving and mapping for the transparent mode.

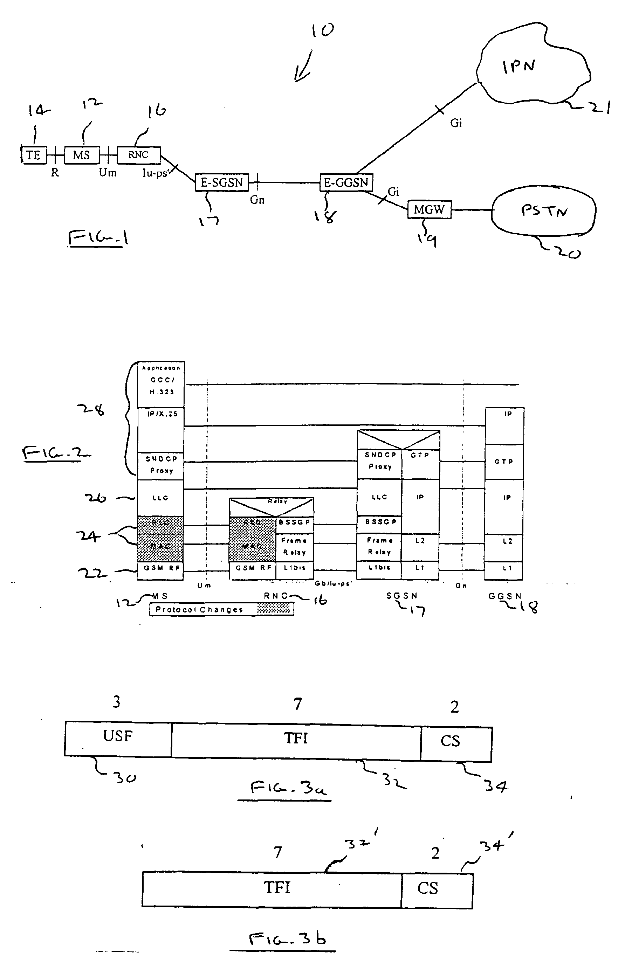

In Figure 1 in the GPRS system 10, a Mobile Station (MS) 12 having a wired connection R to Terminal Equipment (TE) 14 such as a laptop computer, a modem, a video camera etc., is connected through a radio interface Um to a Radio Network Controller (RNC) 16. The RNC 16 is connected through a radio interface Iu-ps to an Enhanced Gateway GPRS Support Node (E-GGSN) 17 and through the E-GGSN to an Enhanced Serving GPRS Support Node (E-SGSN) 18. The E-GGSN connects through interfaces Gi to a Medium GateWay 19 and then the Public Switched Telephone Network (PSTN) 20, and also to a Multimedia Internet Protocol (IP) network 21.

RNC 16 transmits signals to the cell within which a Mobile Station 20 is located. Communications between the RNC 16 and the MS 20 are controlled by a 7 layer protocol stack, Figure 2. The lowest layer 22 comprises the GSM Radio Frequency layer, also known as the physical layer. The second lowest layer 24 is the Radio Link Control/Medium Access Control RLC/MAC layer, above which lies the Logical Link layer (LLC) 26. Higher layers 28 are not relevant to the present invention.

The system of Figure 1 and the protocol stack of Figure 2 are standard arrangements, however the areas which are altered to allow implementation of the invention are shown shaded.

Figure 3a illustrates an RLC/MAC header for use with video data streams according to the invention. The header comprises three fields, an Uplink State Flag (USF) 30; a Temporary Flow Identity (TFI) 32; and Coding Schemes (CS) 34.

The USF is 3 bits in length and the TFI is 7 bits in length. Both are defined in ETSI, EN301 349, GSM 4.60 Version 6.3.0, 1999-04.

Comparison of the header according to the invention with prior art standard headers will show that it is substantially shorter in length. The final block indication or sequence counter has been removed. This functionality is achieved by using the End Of Sequence (EOS) code in the video bit stream.

In the uplink from the MS 12 to the BTS 18, there is no need for USF 30, and the uplink header is illustrated in Figure 3b; it comprises a TFI field 32' and a CS field 34'.

The CS field 34 specifies the channel coding rate for the video payload. Four options are provided, i.e.,

| **CS** | **CODING RATE** |
|---|---|
| 00 | 1/1 |
| 01 | 2/3 |
| 10 | 1/2 |
| 11 | 1/3 |

When CS is 00, no channel coding is performed, and this will be referred to as the transparent mode. In this mode, the video data is not protected by channel coding schemes at all. This mode can be used when propagation conditions are good.

The four modes corresponding to the four coding rates will now be described in more detail.

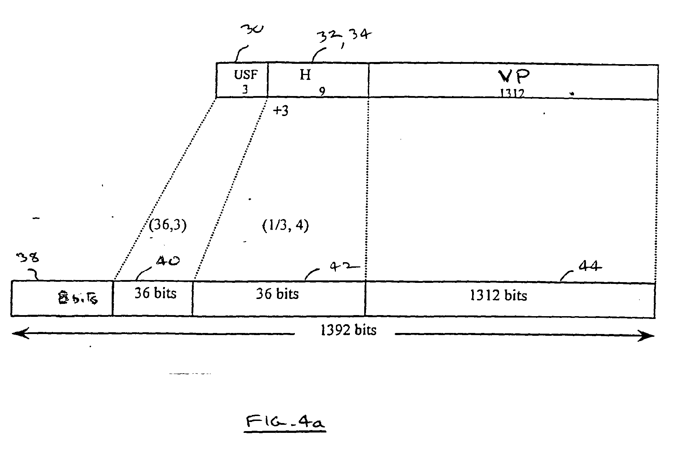

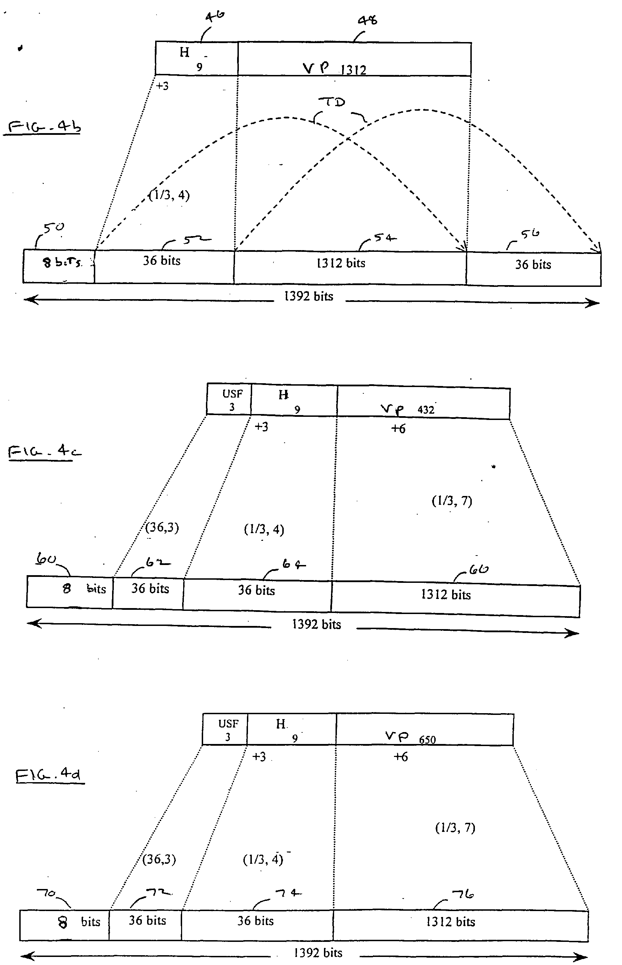

In the transparent mode RLC/MAC format illustrated in Figure 4a, there are eight stealing bits 38, which are used to indicate that the payload includes video data. In the USF 30, a (36, 3) Block Code is applied and there are 36 bits in the corresponding block 40. The TFI 32 and CS 34 are combined in the header block H; in addition to the nine header bits, there are three tailing bits; a (1/3, 4) convolutional coding is applied, and the header block 42 has 36 bits. The video payload VP has 1312 bits in its block 44. The total block length is 1392 bits.

Figure 4b shows the RLC/MAC format for transparent mode uplink. There are eight stealing bits 50. The header H 46 has 9 bits for TFI and CS plus 3 tailing bits. A (1/3, 4) convolutional coding is applied and the block 52 has 36 bits. The video payload VP 48 has 1312 bits, carried over to block 54. An additional block 56 called a time diversity (TD) block has 36 bits to give a total block length of 1392 bits. The 36 bits in block 56 allow the application of time diversity, and repetition of the header 46, indicated by the dotted line TD. The repetition can reduce errors, unless both blocks 52, 56 are damaged when error correction cannot be made.

Figures 4c, 4d and 4e show only the RLC/MAC downlink formats for the other three CS codes. The same coding schemes are used for the corresponding uplinks.

In Figure 4c for CS field equals 01 and coding rate 2/3, again there are 8 stealing bits in block 60. A (36, 3) Block Code is applied to the 3 bit USF, and there are 36 bits in block 62. The header H of 9 bits again has an additional 3 tailing bits; a (1/3, 4) convolutional coding is applied and block 64 has 36 bits. The video payload (VP) has 432 bits plus 6 tailing bits. A (1/3, 7) convolutional coding is applied with puncturing 2 bits, giving 1312 bits in block 66. In Figure 4d for CS field equals 10 and coding rate 1/2, blocks 70, 72, and 74 are similar to block 60, 62 and 64 in Figure 4c. The video payload VP is 650 bits plus 6 tailing bits. A (1/3, 7) convolutional coding is applied with puncturing 656 bits giving a 1312 bit block 76.

In Figure 4e for CS field equal to 11 and coding rate 1/3, blocks 80, 82, 84 are similar to blocks 60, 62, 64. The video payload VP is 868 bits and there are 6 tailing bits. A (1/3, 7) convolutional coding is applied with puncturing 1310 bits, giving a 1312 block 86.

The bit rates for the video data are as follows.

| **CODING RATE** | **VIDEO BIT RATE (kbps)** |
|---|---|
| 1/1 | 65.6 |
| 2/3 | 43.4 |
| 1/2 | 32.5 |
| 1/3 | 21.6 |

The transparent mode allows a higher video bit rate to be transmitted over a telecommunications system than has previously been possible.

The selected one of the four CS is applied to the video data stream by a video encoder in TE 14 in Figure 1. The video encoder implements its own error protection schemes, which are naturally suitable for video. In effect, the RLC/MAC layer 24 in Figure 2 is transparent, and channel coding is performed in the physical layer 22. The channel coding overhead will continue to exist in all parts of the network. However, since the main bandwidth limitation is in the air interface, it is preferable to optimize the efficiency between the MS 12 and RNC 16. The selection of the coding rate is thus made by the video encoder in accordance with either video quality of service or channel conditions. For example, if the channel is very bad, a more powerful channel coding scheme is selected.

From Figures 4c to 4e it will be clear that all the bits of the RLC block, which have been subjected to channel coding, have also been interleaved and mapped into four bursts as conventionally applied in the EDGE system. However, the payload in the transparent mode, Figures 4a and 4b, is not interleaved at all.

One option is to disable the standard EDGE interleaver when sending video data by the transparent mode. The EDGE interleaver is located in the physical layer in the MS 12 in Figure 1. However this may be impractical or impossible for existing mobiles.

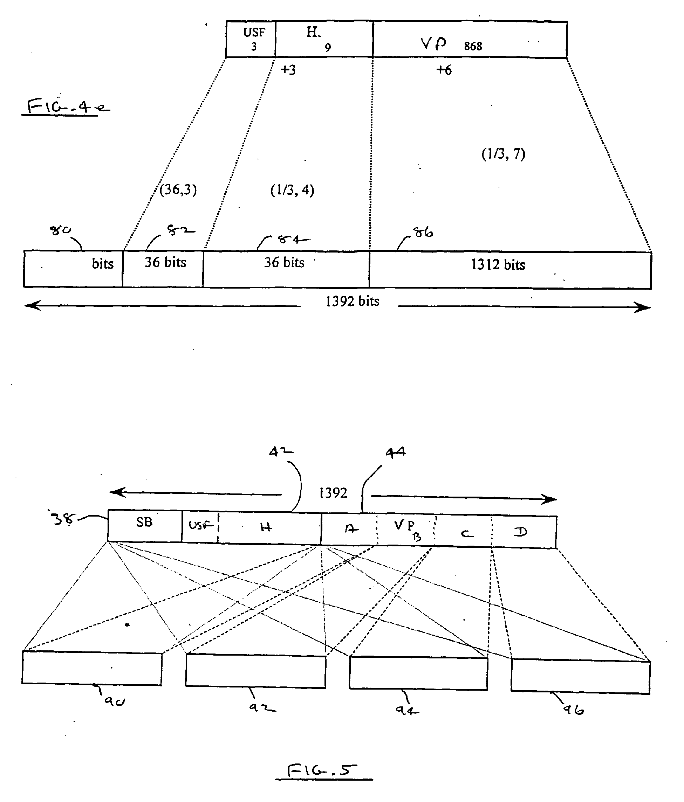

An alternative inventive method is proposed. The payload is first de-interleaved to cancel out the subsequent interleaving process in the EDGE interleaver. The arrangement is illustrated in Figure 5. The stealing bits of block 38 and the header block 42 are interleaved to each of four bursts 90, 92, 94, 96 as shown by the full lines. However, the video payload 44 is divided into four parts A B C D and one part is supplied to each burst, as shown by the dotted lines. Thus part A is supplied to burst 90, part B to burst 92 etc; i.e. the parts in A B C D are mapped to the bursts 90, 92, 94, 96 in order.

The advantages of the invention are that the RLC block header is made much smaller than in conventional arrangements so that the video payload capacity is increased. More importantly, when the transparent mode is used and channel protection is performed in the application layer, the same level of protection provided by non-selective 1/3 convolutional coding can be achieved at rates lower than 1/2. The extra capacity made available can be used to improve error resilience or video quality or both.

While the invention has been described in respect to a mobile telecommunications system, it will also find application in the fixed packet switch telecommunications network when real-time video services are supplied.

## Claims

1. In a telecommunications system, a method of supplying a real-time video data service characterized by the steps of defining a plurality of channel coding rates applicable to video data, said plurality including a 1/1 coding rate; selecting one of said rates and applying it to video data; and transmitting the coded video data over a link to a video receiver.

2. A method according to Claim 1 in which the telecommunications system is a mobile radio telecommunication system, and the coded video data is transmitted over a radio link to a video receiver in a mobile system.

3. A method according to Claim 2 comprising transmitting a selected channel coding rate as a coding scheme field CS in a header with each transmitted radio burst.

4. A method according to any preceding claim in which the plurality of channel coding rates comprise the rates 1/1, 2/3, 1/2 and 1/3.

5. A method according to Claim 3 or Claim 4 in which the channel coding rate is 1/1, further comprising in the uplink mode the step of applying time diversity to a first combination of a video payload VP plus the header H comprising the coding scheme CS and the temporary flow indicator TFI fields and to a second combination of the video payload VP plus a further block of bits.

6. A method according to Claim 5 in which the real-time video service is provided in a telecommunications system having interleaving, further comprising the step of dividing each block of video payload into a plurality of divisions; and supplying each division in turn to consecutive bursts for radio transmission, and also supplying each burst with the header fields for that payload.

7. A method according to any one of Claims 3 to 6 further comprising the step of providing a plurality of stealing bits in each header arranged to indicate that a payload comprises real time video data.

8. A mobile radio telecommunications system 10 comprising a core network, at least one Support Node, 17, 18, at least one Radio Network Controller 16, and at least one Mobile Station 12 , the system being arranged for supply of a real time video service to said mobile user characterized in that said system is arranged to select one of a plurality of channel coding rates, said plurality including a 1/1 rate, to apply said selected rate to a video signal, and to supply the coded signal to said Mobile Station.

9. A system according to Claim 8 in which channel coding for the real time video signal is applied in the application layer of the conventional 7-layer telecommunications protocol.
